(19) Europäisches Patentamt
European Patent Office
Office européen des brevets

(11) **EP 4 381 257 B1**

(12) **EUROPÄISCHE PATENTSCHRIFT**

(45) Veröffentlichungstag und Bekanntmachung des Hinweises auf die Patenterteilung:
**23.07.2025 Patentblatt 2025/30**

(21) Anmeldenummer: **22740875.4**

(22) Anmeldetag: **07.07.2022**

(51) Internationale Patentklassifikation (IPC):
**G01H 13/00** *(2006.01)*

(52) Gemeinsame Patentklassifikation (CPC):
**G01H 13/00**

(86) Internationale Anmeldenummer:
**PCT/EP2022/068821**

(87) Internationale Veröffentlichungsnummer:
**WO 2023/011833 (09.02.2023 Gazette 2023/06)**

(54) **VERFAHREN ZUR RESONANZANALYSE EINER SCHWINGMASCHINE**

METHOD FOR RESONANCE ANALYSIS OF A VIBRATING MACHINE

PROCÉDÉ D'ANALYSE PAR RÉSONANCE D'UNE MACHINE VIBRANTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.08.2021 DE 102021120494**

(43) Veröffentlichungstag der Anmeldung:
**12.06.2024 Patentblatt 2024/24**

(73) Patentinhaber: **Sandvik Rock Processing Australia Pty Limited**
**North Ryde, NSW 2113 (AU)**

(72) Erfinder: **SCHAEFER, Jan**
**64293 Darmstadt (DE)**

(74) Vertreter: **WSL Patentanwälte Partnerschaft mbB**
**Kaiser-Friedrich-Ring 98**
**65185 Wiesbaden (DE)**

(56) Entgegenhaltungen:
**WO-A1-2019/072462      WO-A2-2004/059399**
**DE-A1- 102005 042 085**

• **RAHMAN A G A ET AL: "Effectiveness of Impact-Synchronous Time Averaging in determination of dynamic characteristics of a rotor dynamic system", MEASUREMENT, INSTITUTE OF MEASUREMENT AND CONTROL. LONDON, GB, vol. 44, no. 1, 1 January 2011 (2011-01-01), pages 34 - 45, XP027503368, ISSN: 0263-2241, [retrieved on 20101117], DOI: 10.1016/ J.MEASUREMENT.2010.09.005**

## EP 4 381 257 B1

**Beschreibung**

Die vorliegende Erfindung betrifft ein Verfahren zur Resonanzanalyse einer Schwingmaschine.

Maschinen, die eine Schwingeinheit aufweisen, können, wenn die Schwingung der Schwingeinheit gleich oder ähnlich der Eigenfrequenz der Maschine ist, Schaden durch die selbst erzeugte Schwingung nehmen. Durch die periodisch wiederkehrende Anregung wird immer mehr Energie auf das System übertragen. Durch diese konstruktive Interferenz wird die Energie in dem System gespeichert, bis es zur Resonanzkatastrophe kommt. Im schlimmsten Fall kann hierbei die Maschine zerstört werden.

Um dies zu vermeiden, ist es notwendig, die Frequenz zu kennen, bei der eine solche Resonanzkatastrophe auftreten kann. Dies wird mit sogenannten Resonanzanalysen durchgeführt.

Bisher wurde bei Resonanzanalysen die Maschine mit einem kurzen externen Impuls in Schwingung gebracht, z.B. indem mit einem Impulshammer auf die Maschine geschlagen wird. Währenddessen zeichnen Sensoren die Schwingantwort auf den einmaligen Impuls auf. Der Impuls ist ein Dirac-Signal, d.h. ein kurzzeitiges Signal, das durch eine Vielzahl von Schwingungen überlagert ist. Über entsprechende Analyseverfahren, wie z.B. einer Frequenzanalyse der Messung, können Rückschlüsse auf die Eigenfrequenz der Maschine erzielt werden.

Zum Durchführen dieser Schwingungsanalyse wird die Schwingmaschine angehalten, damit die Schwingantwort nicht mit anderen Schwingsignalen überlagert wird.

DE 10 2005 042085 A1 offenbart ein Vibrationsmesssystem zur frequenzselektiven Schwingungsmessung insbesondere niedriger Frequenzen wie sie im Bereich der Automatisierungs- und Antriebstechnik relevant sind. Es wird vorgeschlagen, eine breitbandige Senderstruktur, die direkt von dem zu bestimmenden Anregungssignal angeregt wird, üer eine elektrostatische oder induktive Kraft mit einer Empfängerstruktur zu koppeln. Durch diese Kraftkopplung kommt es zu einer Amplitudenmodulation eines die Empfängerstruktur anregenden Trägersignals. Aus dem Spektrum des amplitudenmodulierten Trägersignals lässt sich das eingentliche Anregungssignal z. B. durch eine geeignete Wahl der Frequenz des Trägersignals extrahieren. Um eine möglichst störungsunanfällige Schwingungsanalyse zu ermöglichen, wird zuvor aus dem amplitudenmodulierten Trägersignal ein beispielsweise durch Stutzenanregungen bewirktes Störsignal weitgehend eliminiert.

WO 2004/059399 A2 offenbart ein System zur Diagnose bzw. Prüfung des Zustandes von Maschinen und deren Teilen, speziell von rotierenden Maschinen und deren Bauteilen, wie von Flugzeug- und Helikoptertriebwerken, Getrieben etc., anhand von Vibrationsdaten. An verschiedenen Stellen der Maschine werden im Betrieb Vibrationen mittels Sensoren gemessen und eine sog. "Vibrations-Signatur" erstellt. Bei z. B. Flugzeugtriebwerken werden dabei auch unterschiedliche Rotationsgeschwindigkeiten und andere Parameter berücksichtigt. Für den "Normalfall", d. h. den intakten Zustand der Maschine, wird eine sog. "Basis-Signatur" ("Baseline-Signature") erstellt. Abweichungen der Vibrations-Signatur-Daten bei späteren Messungen von der Basis-Signatur können dabei Hinweise auf Unregelmäßigkeiten, wie Verschleiß oder Beschädigungen an rotierenden Teilen, verstopfte Düsen etc., und auf mögliche Ausfallrisiken liefern.

Rahman et al., "Effectiveness of Impact-Synchronous Time Averaging in determination of dynamic characteristics of a rotor dynamic system", Measurement 44, (2011), 34-45, offenbart ein Verfahren, bei dem ein Spektrum der Schwingungen eines rotierenden Systems erfasst werden. Auch Eigenfrequenzen des rotierenden Systems sollen charakterisiert werden. Ein Problem, mit dem sich Rahman et al. befassen, sind durch die Rotationskräfte auftretender Hintergrund und Harmonische, welche das Spektrum dominieren und die Eigenfrequenzen überdecken können. Anders als bei nicht-rotierenden Systemen, wie z. B. einer Schwingmaschine, werden die dynamischen Eigenschaften und somit das ermittelte Spektrum bei den bei Rahman et al. angesprochenen rotierenden Systemen auch von gyroskopischen Effekten beeinflusst, die von der Drehgeschwindigkeit abhängig sind. Ein von Rahmean et al. vorgestelltes Verfahren, ISTA ("Impact-Synchronous Time Averaging), soll geeignet sein, die von der Rotationsgeschwindigkeit abhängigen Komponenten, deren Harmonische und den Hintergrund aus dem ermittelten Antwortsignal zu elimieren.

WO 2019/072462 A1 offenbart eine mobile Vorrichtung zum Erfassen der Zustands- und Betriebsparameter von Schwingmaschinen mit Sensoreinheiten und einer mit den Sensoreinheiten verbundenen Auswerteeinheit, wobei die von den Sensoreinheiten erfassten Messdaten kabellos an die Auswerteeinheit übermittelbar sind, und wobei jede Sensoreinheit ausgestattet ist mit mindestens drei orthogonal zueinander ausgerichteten Beschleunigungssensoren und einer integrierten Schaltung zur Bearbeitung der von den Sensoreinheiten erfassten Messdaten. Dabei bilden mindestens vier Sensoreinheiten ein Sensornetzwerk, wobei die Sensoreinheiten in gegenseitigem Abstand mit unbestimmter Orientierung an der Schwingmaschine lösbar befestigbar sind, und durch die mindestens drei Beschleunigungssensoren einer Sensoreinheit ein lokales Koordinatensystem X1, Y1, Z1 definiert ist, auf dessen Raumachsen die in einer Sensoreinheit erfassten lokalen Messdaten bezogen sind, und jede Sensoreinheit einen Schwerkraftsensor zur Erfassung der Orientierung des lokalen Koordinatensystems X1, Y1, Z1 im Raum besitzt, und die Auswerteeinheit eine Einrichtung zur Transformation der lokalen Messdaten in ein übergeordnetes einheitliches Koordinatensystem X0, Y0, Z0 unter Berücksichtigung der Messdaten des Schwerkraftsensors aufweist.

Aufgabe der vorliegenden Erfindung ist es, eine Resonanzanalyse einer Schwingmaschine durchzuführen, die einfach und kostengünstig ist und den Betrieb so wenig wie möglich stört.

Die Aufgabe wird durch die Gegenstände der unabhängigen Ansprüche gelöst. Vorteilhafte Weiterbildungen und bevorzugte Ausführungsformen bilden den Gegenstand der Unteransprüche.

Ein Verfahren zur Resonanzanalyse einer Schwingmaschine, nämlich eines Schwingsiebes oder eines Schwingförderers, im laufenden Betrieb umfasst folgende Schritte:

- Bestimmung eines Betriebsschwingungssignals, das die Schwingungen der Maschine in einem regulären Betrieb umfasst,
- Anregen der Schwingmaschine während des Betriebs mit einem Anregungssignal zum Anregen zusätzlicher Schwingungen an der Schwingmaschine, wobei das Anregungssignal ein Dirac-Impuls ist,
- Messen eines Antwortschwingsignals der Schwingmaschine auf die Anregung während des Betriebes,
- Bestimmen eines Korrektursignals (9) durch VenNenden des Betriebsschwinqunqssiqnals (8),
- Bestimmen eines Subtraktionssignals durch Substrahieren des Korrektursignals von dem Antwortschwingungssignal, und
- Frequenzanalyse des Subtraktionssignals zur Bestimmung der Eigenfrequenzen der Schwingmaschine, wobei die dominierenden Frequenzen des Subtraktionssignals den Eigenfrequenzen des Systems im Frequenzbereich des Anregungssignals entsprechen.

Eine Schwingmaschine ist eine Maschine, die zumindest zum Teil im Betrieb absichtlich in Schwingung versetzt wird, wobei diese Schwingung mit einer vorbestimmten Frequenz schwingt.

Die Schwingmaschine weist zumindest eine Eigenfrequenz auf, die sich dadurch auszeichnet, dass wenn die Frequenz der Betriebsschwingung gleich der Eigenfrequenz ist, es zur Resonanzkatastrophe führen kann.

Das Betriebsschwingungssignal und das Antwortschwingungssignal werden durch eine Schwingungsdetektionseinrichtung gemessen, wobei die Schwingungsdetektionseinrichtung zumindest ein oder mehrere Schwingungssensoren umfasst. Diese Schwingungssensoren können beispielsweise MEMS-Beschleunigungssensoren, Piezosensorender Sensoren aus der Mikrofontechnik sein. Sensoren aus der Mikrofontechnik sind beispielsweise Druckmikrofone, Kondensatormikrofone, Tauchspulenmikrofone, Bandmikrofone oder Kristallmikrofone.

Die Bestimmung des Subtraktionssignals als auch die Frequenzanalyse des Subtraktionssignals wird auf einem Computer durchgeführt, wobei Computer hier allgemein zu verstehen ist und PCs, Laptops, tragbare Handgeräte wie z. B. Smartphones und Tablets, aber auch speziell für dieses Verfahren hergestellte Einrichtungen umfassen können.

Die Anregung der Schwingmaschine kann manuell oder maschinell durchgeführt werden. Üblich ist das Anregen mithilfe eines Impulshammers.

Bisher konnte eine Resonanzanalyse nicht im laufenden Betrieb durchgeführt werden, da die Betriebsschwingungen jegliche Messung dominieren und Impulsantworten eines Anregungssignals überlagern, so dass in der Auswertung, z.B. nach einer Fouriertransformation des Signals, lediglich die Frequenz der Betriebsschwingung zu erkennen war. Ein Bestimmen der Schwingantwort war hier nicht möglich.

Die Erfinder haben erkannt, dass die Betriebsschwingungen zeitlich stabil bleiben. Zeitlich stabil bedeutet in diesem Zusammenhang, dass die Frequenzen, Amplituden und Phasen der Betriebsschwingung sich innerhalb von z.B. 10 Minuten nicht mehr als 10%, vorzugsweise nicht mehr als 5% und insbesondere nicht mehr als 1% ändern.

Die Betriebsschwingung hängt auch vom Beladungszustand der Schwingmaschine ab. Eine nicht beladene Schwingmaschine zeigt über einen langen Zeitraum von z.B. einigen Wochen, die im wesentlichen gleiche Betriebsschwingung. Ändert sich der Beladungszustand, dann kann sich dadurch das Schwingverhalten der Schwingmaschine ändern. Die Schwingweite kann sich hierbei bis zu 10 % ändern. Es ist daher zweckmäßig, das Betriebsschwingungssignal und das Antwortschwingungssignal im Wesentlichen im gleichen Beladungszustand zu erfassen.

Dadurch, dass die Betriebsschwingung zeitlich stabil ist, kann das Betriebsschwingsignal als Korrektursignal verwendet werden und vom Messsignal, z.B. dem Antwortschwingsignal, abgezogen werden. Als Signal verbleibt das durch das Anregungssignal erzeugte Antwortschwingungssignal.

Wurde kein Anregungssignal auf die Schwingmaschine übertragen, so ergibt sich nach Abzug des Korrektursignals als Subtraktionssignal eine Nulllinie.

Ein Vorteil des hier vorliegenden Verfahrens liegt darin, dass es im laufenden Betrieb durchgeführt werden kann. Hierbei muss ein Nutzer anders als im Stand der Technik, die zu untersuchende Maschine nicht herunterfahren und kann sie auch während der Messung weiterverwenden. Die Resonanzanalyse der Maschine kann auch im regulären Betrieb durchgeführt werden, d.h., dass die Maschine beladen ist. Je nach Einsatzgebiet einer solchen Schwingmaschine, können die Kosten, die durch eine Stillstandzeit während einer Messung entstehen, mehrere Millionen Euro betragen. Viele Nutzer scheuen daher eine solche Überprüfung und riskieren damit, dass die Maschine Schaden nimmt. Im schlimmsten Fall, kann hierdurch Menschenleben gefährdet werden.

Je nach Anwendungsort können auch andere Maschinen, welche in räumlicher Nähe zur Schwingmaschine stehen uns selber mit einer bestimmten Frequenz arbeiten, die zu untersuchende Schwingmaschine zum Schwingen bringen. Bisher hätten auch diese Maschinen zum Stillstand gebracht werden müssen, da ansonsten die Messung "verunreinigt" wäre. D.h. die Frequenzen der anderen Maschinen würden ebenfalls in der Analyse auftauchen, wodurch ggf. falsche Eigenfrequenzen der zu untersuchenden Schwingmaschine bestimmt würden. Um dies auszuschließen, wurden bisher z.T. ganze Werkshallen und Produktionsstätten heruntergefahren, um eine einzelne Maschine zu testen. Dies ist unwirtschaftlich.

Bei dem vorliegenden Verfahren kann jedoch auch die Schwingung umgebener Maschinen als Teil des Betriebsschwingungssignals im Korrektursignal enthalten sein und dann von dem Antwortschwingungssignal abgezogen werden. Voraussetzung hierbei ist nur, dass sich die Eigenschaften der umliegenden Maschinen nicht ändert, als z.B. ein- oder ausgeschaltet wird oder eine andere Frequenz eingestellt wird.

Ein weiterer Vorteil liegt darin, dass die Eigenfrequenz der Maschine unter realistischen Bedingungen gemessen wird. Die Erfinder haben erkannt, dass, wenn die Maschine stillsteht, sich die Eigenfrequenzen leicht von den Eigenfrequenzen im Betrieb unterscheiden. Dies liegt zum Beispiel daran, dass die entsprechende Maschine befüllt ist und das Füllmaterial Auswirkungen auf die Eigenfrequenzen hat.

Da sich das Schwingungsverhalten aufgrund einer Beladung ändern kann, ist die Resonanzanalyse während des regulären Betriebes realistischer als herkömmliche Resonanzanalysen, bei welchen die Schwingmaschine im unbeladenen Zustand und außer Betrieb analysiert wird. Vorzugsweise wird das Betriebsschwingungssignal modifiziert bevor es als Korrektursignal verwendet wird. Hierzu kann das Korrektursignal dem Betriebsschwingungssignal bspw. als Funktion bspw. mittels Fitten, nachgebildet werden.

So kann bei der Erzeugung des Korrektursignals die Frequenz mit der stärksten Amplitude aus dem Betriebsschwingungssignal bestimmt werden, welche im folgenden Betriebsfrequenz genannt wird. Danach wird die Amplitude und Phase der Betriebsfrequenz in dem Betriebsschwingungssignal und die Amplitude und Phase der Harmonischen der Betriebsfrequenzen in dem Betriebsschwingungssignal bestimmt. Danach wird aus der Amplitude und Phase der Betriebsfrequenz sowie aus Amplitude und Phase der Harmonischen der Betriebsfrequenz das Korrektursignal erzeugt.

Das Korrektursignal kann aber auch Signale von anderen in Betrieb befindliche Maschinen in der Nähe und/oder um Seitenbänder und/oder Feder-/Hartkörper-Resonanzen der Schwingmaschine umfassen.

Das Betriebsschwingungssignal entspricht im Wesentlichen einer Sinusschwingung, wobei die Sinusschwingung überlagert ist von den Sinusschwingungen der Harmonischen. Somit ist es zweckdienlich, wenn das Korrektursignal ebenfalls als Sinussignal der Betriebsfrequenz dargestellt wird, welches überlagert ist mit den Sinussignalen der Harmonischen. Eine Sinusfunktion lässt sich durch die Frequenz f, Amplitude A und Phase P definieren. Wenn also Frequenz, Amplitude und Phase der Betriebsfrequenz sowie der Harmonischen bekannt sind, lässt sich mit diesen Informationen das Korrektursignal erzeugen.

Vorzugweise sind die Harmonischen eine oder mehrere der Vielfache der Betriebsfrequenz, bevorzugt hierbei sind sie das 1/2-, 3/2-, 1/4-, 2-, 3-, 4-, 5-, 8-, 16- und 32-fache der Betriebsfrequenz.

Ein Vielfaches der Betriebsfrequenz kann hierbei auch ein Bruchteil der Eigenfrequenz sein, wie z. B. 1/2 oder 1/4. Diese werden dann Subharmonische genannt.

Im einfachsten Fall kann das Betriebsschwingungssignal an einer Anzeige grafisch dargestellt werden und die Parameter des Korrektursignals werden derart angepasst, dass es möglichst gut dem Betriebsschwingungssignal entspricht. Alternativ kann auch kontinuierlich das Subtraktionssignal erzeugt werden, indem das Korrektursignal von einem Antwortschwingsignal, welches kontinuierlich gemessen wird, subtrahiert wird, ohne dass eine Anregungsschwingung an der Schwingmaschine anliegt. Die Parameter des Korrektursignals werden dann solange angepasst, bis als Antwortschwingsignal eine Nulllinie zu erkennen ist.

Vorzugsweise wird das Betriebsschwingungssignal durch automatische Parameterschätzung geschätzt und mit den daraus ergebenen Parametern modifiziert.

Verfahren zur automatischen Parameterschätzung, englisch auch Fit genannt, sind bekannt. Derartige Verfahren sind besonders geeignet, wenn das zu untersuchende Signal ein periodisches, sinusartiges Signal ist. Eine solche automatische Parameterschätzung kann mit einem Softwareprodukt realisiert werden, bei dem das hierdurch erzeugte Korrektursignal, im mathematischen Sinne, sehr nah an das Betriebsschwingungssignal herankommt. Dadurch lässt sich das Betriebsschwingungssignal nahezu vollständig aus dem Antwortschwingungssignal heraussubtrahieren, wodurch sich lediglich die Antwort der Schwingmaschine auf das Anregungssignal ergibt.

Vorzugsweise ist die Funktion des Betriebsschwingungssignal näherungsweise gegeben durch:

$$y(t) = \sum_{n=1}^{k} A_n \sin(n\,f\,t + P_n),$$

wobei n den Grad der Harmonischen angibt, k die höchste Harmonische darstellte, An die Amplitude der Harmonischen, f die Betriebsfrequenz, t die Zeit und $P_n$ die Phase der jeweiligen Harmonischen ist.

Dieser mathematischen Funktion stellt eine Summe über mehrere Sinusfunktionen dar.

Vorzugsweise ist k zumindest 1, 2 oder 4, um eine ausreichende Präzision des Korrektursignals zu erhalten.

Vorzugsweise ist k maximal 64, 32 oder 16, damit der Rechenaufwand nicht zu groß wird.

Sind anteilige Harmonische, welche auch Subharmonische genannt werden, wie z.B. 1/2, o- der 1/4, dann wird die obige Formel entsprechend mit einem Term für diese anteiligen Harmonischen angepasst.

Es ist auch denkbar andere Terme hinzuzufügen, die andere Frequenzen aufweisen, um andere in Betrieb befindliche Maschinen und/oder um Seitenbänder und/oder Feder-/Hartkörper-Resonanzen abzudecken.

Alternativ kann das Korrektursignal auch dadurch dem Betriebsschwingungssignal nachgebildet werden, indem über eine vorbestimmte Dauer das Betriebsschwingungssignal aufgenommen wird und als Korrektursignal verwendet wird.

Hierdurch erspart man sich die mathematische Beschreibung des Betriebsschwingungssignals und verwendet hierfür das originale Betriebsschwingungssignal. Nachteilig hierbei könnte sein, dass die benötigte Dauer abgeschätzt werden muss. Auf der anderen Seite könnte man, wenn zu kurz aufgenommen wurde, das aufgenommene Signal wiederholt verwendet werden.

Durch die Verwendung des aufgenommenen Signals, kann vom Antwortschwingungssignal das Betriebsschwingungssignal abgezogen werden ohne Qualitätseinbuße durch eine mathematische Anpassung zu haben.

Des Weiteren würden hierdurch nicht sinusförmige Signale berücksichtigt werden.

Das Anregungssignal ist ein Dirac-Impuls.

Ein Dirac-Impuls im Sinne der vorliegenden Erfindung ist als ein nur näherungsweise mathematischer Dirac-Impuls zu verstehen, da es physikalisch unmöglich ist, einen reinen mathematischen Dirac-Impuls zu erzeugen.

In der Praxis wird ein solcher Dirac-Impuls durch einen Schlag eines Impulshammers erzeugt.

Ein Dirac-Impuls zeichnet sich dadurch aus, dass ein Impuls mit einer möglichst kurzen Dauer auf die zu untersuchende Schwingmaschine übertragen wird, wodurch alle Frequenzen gleichermaßen angeregt werden.

Die Frequenzen, die nicht der Eigenfrequenz oder einem Vielfachen hiervon entsprechen, werden sofort gedämpft.

Die Eigenfrequenzen sowie Vielfache hiervon schwingen jedoch unter Einfluss des Dirac-Impuls weiter und können gemessen werden.

In der Praxis wird ein solcher Dirac-Impuls jedoch nur ein gewisses Spektrum an Frequenzen anregen.

Vorzugsweise wird die Eigenfrequenz in einem Frequenzbereich von größer als 0,01 Hz, vorzugsweise von größer als 0,1 Hz und insbesondere von größer als 1 Hz bestimmt.

Frequenzen, die hier tiefer liegen, können zum einen durch den Dirac-Impuls nicht so leicht angeregt werden und sind auf der anderen Seite für die Messung uninteressant, da die typischen Frequenzen der Maschine oberhalb der hier angegebenen Grenze liegen.

Vorzugsweise wird die Eigenfrequenz in einem Frequenzbereich bis kleiner als 1 kHz, vorzugweise von bis kleiner als 500 Hz und insbesondere bis kleiner als 50 Hz bestimmt.

Der Dirac-Impuls wird höhere Frequenzen nur noch gering anregen, außerdem wird die Betriebsfrequenz nicht oberhalb dieser Grenze liegen, so dass Eigenfrequenzen, die oberhalb von diesen Werten liegen, keine Gefahr für die Maschine darstellen.

Vorzugsweise wird nach dem Schritt der Frequenzanalyse die Betriebsfrequenz geändert und alle Schritte werden wiederholt.

Durch das Ändern der Betriebsfrequenz, kann sichergestellt werden, dass bei den unterschiedlichen Betriebsfrequenzen keine neuen Eigenfrequenzen auftauchen oder die bereits vorhandenen Eigenfrequenzen anders gewichtet sind. Ein Nutzer einer Schwingmaschine möchte Sicherheit über eine Vielzahl von möglichen Betriebsfrequenzen haben und nicht jedes Mal, wenn er eine neue Betriebsfrequenz einstellen möchte, überprüfen müssen, ob diese auch sicher ist.

Vorzugsweise wird an mehreren Stellen ein Anregungsschwingungssignal auf die Schwingmaschine übertragen.

Dadurch wird sichergestellt, dass auch Eigenfrequenzen der Schwingmaschine erkannt werden, die bei anderen Stellen eventuell übersehen worden sein könnten.

Vorzugsweise wird an mehreren Stellen ein Antwortschwingungssignal gemessen.

Hierdurch wird sichergestellt, dass alle Eigenfrequenzen der Schwingmaschine in dem vorbestimmten Bereich erfasst werden.

Vorzugsweise findet die Bestimmung eines Betriebsschwingungssignals, die Anregung der Schwingmaschine und das Messen eines Antwortschwingungssignals zeitlich überlagert und/oder gleichzeitig statt. Hierbei wird ein Antwortschwingungssignal erfasst, das das Betriebsschwingungssignal und die Reaktion auf die Anregung umfasst. Das Korrektursignal wird aus diesem Antwortschwingungssignal erzeugt und das Korrektursignal wird dann vom Antwortschwingungssignal subtrahiert, so dass das Subtraktionssignal erhalten wird. Das Subtraktionssignal entspricht damit etwa einem Antwortschwingungssignal bei einer sich nicht im Betrieb befindlichen Maschine. Das Subtraktionssignal wird dann der Frequenzanalyse zur Bestimmung der Eigenfrequenzen der Schwingmaschine unterzogen.

Die Verwendung eines Antwortschwingungssignals, das das Betriebsschwingungssignal und die Reaktion auf die Anregung umfasst, vereinfacht die Auswertung. Die Phasen der Betriebsschwingung und ihrer Harmonischen können mittels einer FFT bestimmt werden. Da die einzelnen Phasen der Harmonischen des Betriebsschwingungssignals und die einzelnen Phasen der Harmonischen des Antwortschwingungssignals auf der gleichen Messung des Antwortschwingungssignals beruhen weisen sie den gleichen relativen Bezug auf. So ist es nicht notwendig, einen solchen Phasenbezug des Antwortschwingungssignals zum Betriebsschwingungssignal im Nachhinein, bspw. mittels einer Phasenanpassung, einer zusätzlichen FFT-Bestimmung oder einer Phasenbestimmung durch Bestimmung eines zeitlichen Abstandes, zu bestimmen.

Zwar können die einzelnen Schritte auch nacheinander ausgeführt werden, aber werden sie zeitlich überlagert und/oder gleichzeitig durchgeführt, dann kann das Betriebsschwingungssignal und das Antwortschwingungssignal in einer gemeinsamen Messung aufgenommen werden.

Da die Frequenz der Betriebsschwingung deutlich dominiert, beeinflusst die Impulsantwort nicht die Bestimmung der Frequenz.

Ein Messsystem zur Messung von Eigenschwingungen an einer Schwingmaschine, welches dazu ausgebildet ist, eines der oben beschriebenen Verfahren auszuführen, umfasst zumindest eine Schwingungsdetektionseinrichtung und eine Auswerteeinrichtung.

Solche Schwingungsdetektionseinrichtungen umfassen zum Beispiel die oben beschriebenen Sensoren, und eine Auswerteeinrichtung kann ein wie oben beschriebener Computer sein.

Ein Schwingsieb ist eine Maschine zum Sieben. Hierbei wird ein Feststoffgemisch nach der Größe der Körner getrennt.

Ein Schwingförderer ist eine Maschine zum Transport von Schüttgut. Das Schüttgut wird hierbei mittels linearer, kreisförmiger oder elliptischer Schwingungen bewegt.

Es sind auch Maschinen bekannt, die beide Merkmale umfassen.

Schwingförderer umfassen eine Fördereinrichtung, zumeist eine Schwingförderrinne, einen Schwingantrieb und einer elastischen Aufhängung.

Die Bauteile des Schwingförderers außer die Aufhängung sollen verformungsfest sind. Dies erlaubt, dass die Schwingung gleichmäßig entlang der Schwingförderrinne übertragen werden. Außerdem werden Ermüdungsbrüche so lange wie möglich vermieden.

Die Erfindung wird nachfolgend anhand der in den Zeichnungen dargestellten Beispiele näher erläutert. Die Zeichnungen zeigen schematisch:

Figur 1    Eine Seitenansicht einer Schwingmaschine mit einem Schwingungssensor und einer Auswerteeinrichtung,

Figur 2    Ein Frequenzspektrum eines Antwortschwingungssignals,

Figur 3    Ein Antwortschwingungssignal und ein Korrektursignal übereinander gelagert,

Figur 4    Ein Antwortschwingungssignal und ein Subtraktionssignal,

Figur 5    Frequenzspektrum einer herkömmlichen Schwingungsanalyse einer Schwingmaschine im ausgeschalteten Zustand,

Figur 6    Frequenzspektrum einer Schwingungsanalyse des Subtraktionssignals, und

Figur 7    Flussdiagramm des Verfahrens zur Resonanzanalyse einer Schwingmaschine im laufenden Betrieb.

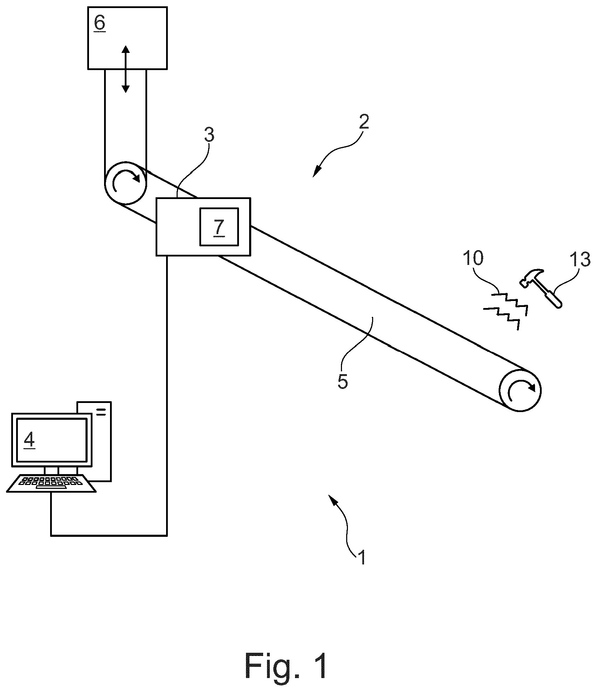

Ein System zur Resonanzanalyse einer Schwingmaschine 1 umfasst einen Schwingförderer 2, eine Schwingungsdetektionseinrichtung 3 und eine Auswerteeinrichtung 4 (Figur 1).

Der Schwingförderer 2 ist zum Fördern von Stückgut, z. B. Gussstücke, und Schüttgut, z.B. Sand oder Kies, ausgebildet

Der Schwingförderer 2 umfasst eine Schwingförderrinne 5 und einen Schwingantrieb 6.

Die Schwingförderrinne 5 ist mit einem Förderboden (nicht dargestellt) ausgebildet, der in einem Schwingrahmen angeordnet ist. Der Förderboden befördert das Schüttgut. Ein Schwingantrieb 6 ist mit dem Schwingrahmen verbunden und setzt diesen in Schwingbewegungen.

Der Schwingantrieb 6 ist unter einem vorbestimmten Winkel zum Förderboden (nicht dargestellt) ausgerichtet und setzt diesen in eine vorbestimmte Richtung weisend in Schwingungen.

Der Schwingantrieb 6 kann bezüglich der Schwingfrequenz eingestellt werden.

Die Schwingförderrinne 5 ist unter einem vorbestimmten Winkel zum Boden und zum Schwingantrieb 6 angeordnet.

Je nach Winkel zum Boden und je nach Winkel zum Schwingantrieb 6 sowie je nach Frequenz wird das Förderverhalten beeinflusst.

Der Schwingantrieb 6 umfasst einen Unwuchtmotor, welcher in diesem Ausführungsbeispiel ein Drehstrommotor ist, der an einem Wellenende ein verstellbares Unwuchtgewicht (nicht dargestellt) aufweist. Die Amplitude der erzeugten Schwingung kann durch manuelle Einstellung der Unwucht verändert werden. Die Frequenz wird durch die Drehzahl des Motors bestimmt.

Im vorliegenden Ausführungsbeispiel werden zwei gegenläufige Antriebe verwendet. Ein einzelner Motor würde eine Kreisbewegung und nicht eine lineare Schwingung erzeugen.

In einem alternativen Ausführungsbeispiel kann auch ein Schwingankerantrieb verwendet werden.

Die Schwingungsdetektionseinrichtung 3 weist zumindest einen Schwingsensor 7 auf. Der Schwingsensor 7 ist in diesem Ausführungsbeispiel ein Beschleunigungssensor, welcher Schwingungen des Schwingförderers 2 in allen drei Raumachsen misst. Der Schwingungssensor 7 ist über eine Funkverbindung mit der Auswerteeinrichtung 4 verbunden. Es sind grundsätzlich auch kabelgebundene Verbindungen möglich.

Die Verbindung zwischen der Schwingungsdetektionseinrichtung 3 und der Auswerteeinrichtung 4 kann über Funk, beispielsweise Bluetooth, WLAN, ZigBee, Z-Wave oder über ein Mobilfunknetz erfolgen, oder kabelgestützt sein, z. B. über ein LAN-Netzwerk.

Der Schwingungssensor 7 ist über eine Anbringvorrichtung mit dem Schwingförderer 2 verbunden. Diese Verbindung kann fest (z. B. durch Schrauben) oder lösbar (z. B. durch Klebestreifen oder einen Klemmmechanismus) ausgebildet sein.

Die Auswerteeinrichtung 4 kann als Computer, herkömmliches Smartphone oder Tablet ausgebildet sein, die durch eine zusätzliche Software Applikation, auch App genannt, die von einem Empfangsmodul erfassten Daten des Schwingungssensors 7 zu verarbeiten.

Die Auswerteeinrichtung 4 kann auch eine Anzeigeeinrichtung umfassen, die die erfassten und weiterverarbeiteten Daten optisch ausgibt.

Das System zur Resonanzanalyse einer Schwingmaschine 1 umfasst des Weiteren einen Impulshammer 13, welcher hier nicht dargestellt ist. Der Impulshammer 13 weist in diesem Ausführungsbeispiel einen Kraftsensor auf, der den übertragenen Impuls beim Schlag auf den Schwingförderer 2 misst.

Nachfolgend wird das Verfahren zur Resonanzanalyse einer Schwingmaschine 2 im laufenden Betrieb erläutert.

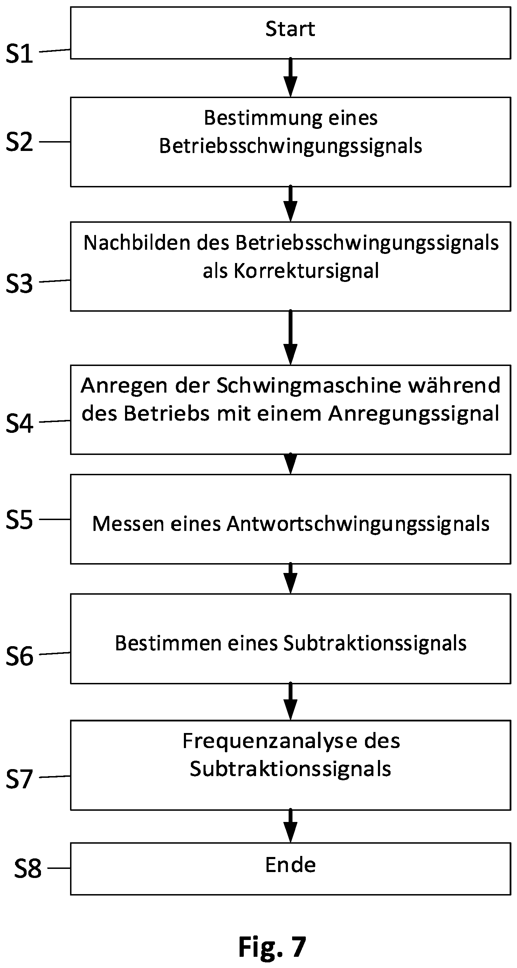

Das Verfahren beginnt mit Schritt S1 (Figur 7).

Im nächsten Schritt (S2) wird das Betriebsschwingungssignal 8 bestimmt. Hierzu messen die Sensoren der Schwingungsdetektionseinrichtung 3 die Bewegungen der Schwingmaschine 2, wobei die Bewegungen durch den Schwinggenerator 2 erzeugt werden. Die Daten werden dann an die Auswerteeinrichtung 4 gesendet.

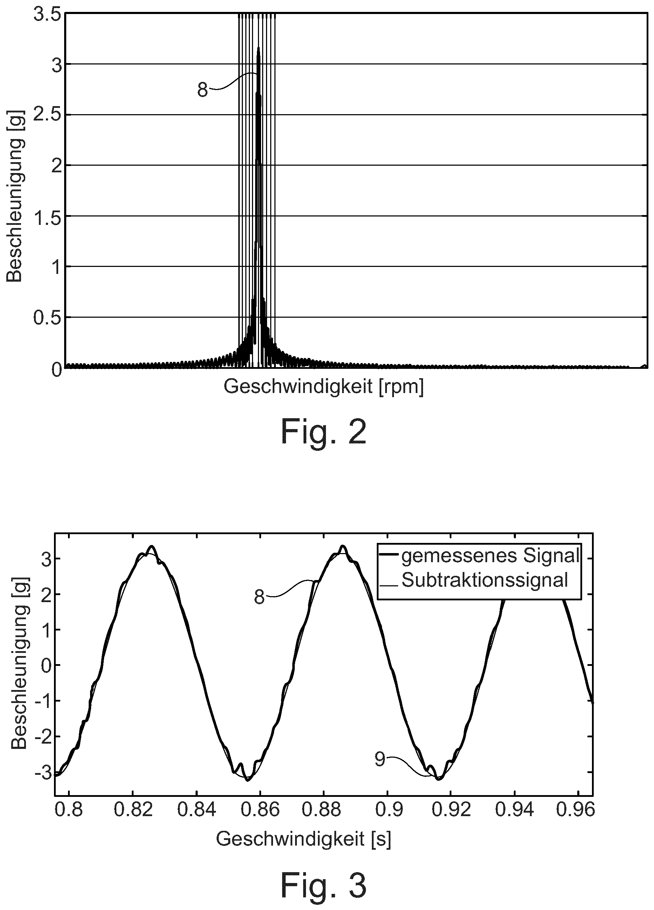

In der Auswerteeinrichtung 4 wird das Betriebsschwingungssignal 8 durch eine Fast-Fourier Transformation vom Zeitraum in den Frequenzraum übertragen. In Figur 2 ist ein einzelner Peak zu erkennen, welcher der Betriebsfrequenz entspricht.

Die Amplitude und Phase werden im Zeitraum bestimmt. In Figur 3 ist ein zeitlicher Abschnitt des Betriebsschwingungssignal 8 zu erkennen, aus dem sich die Amplitude und Phase ablesen lässt.

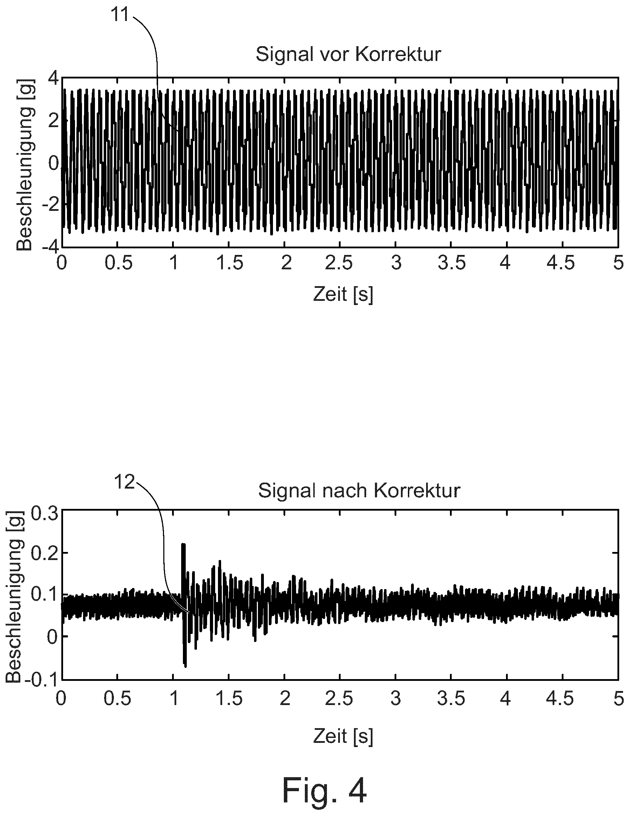

Anschließend wird das Betriebsschwingungssignal 8 modifiziert und als Korrektursignal 9 verwendet (Schritt S3) (Figur 3 und 4).

Eine bestimmte Dauer des Betriebsschwingungssignals 8 wird mithilfe einer automatischen Parameterschätzung (Fit) in eine mathematische Funktion angenähert.

Diese mathematische Funktion hat die Form:

$$y(t) = \sum_{n=1}^{k} A_n \sin(n\,f\,t + P_n),$$

wobei n den Grad der Harmonischen angibt, k die höchste Harmonische darstellte, An die Amplitude der Harmonischen, f die Betriebsfrequenz, t die Zeit und $P_n$ die Phase der jeweiligen Harmonischen ist.

Alternativ kann das Betriebsschwingungssignal 8 auch über eine Fast Fourier Transformation (FFT) in den Frequenzraum überführt werden. In dem Frequenzraum kann dann die Betriebsfrequenz abgelesen werden, da sie hier das dominierende Signal ist. Amplitude und Phase des Betriebsschwingungs-signals 8 ergibt sich aus dem ursprünglichen Betriebsschwingungssignal 8.

Ist die Betriebsfrequenz, Amplitude und Phase bestimmt, kann mit diesen Parametern sowie den Parametern der Harmonischen, deren Parameter durch den Fit ebenfalls ermittelt wurde, das Korrektursignal 9 berechnet werden.

Wurde das Betriebsschwingungssignal 8 gefittet, wird der Fit als Korrektursignal 9 verwendet.

Wurden die Parameter manuell im Zeit- und Frequenzbereich bestimmt, ergibt sich das Korrektursignal 9 ebenfalls aus der mathematischen Funktion:

$$y(t) = \sum_{n=1}^{k} A_n \sin(n\,f\,t + P_n),$$

wobei die Parameter die gleiche Bedeutung haben, wie oben beschrieben und die jeweiligen bestimmten Parameter eingesetzt wurden. In Figur 3 ist eine solche manuelle Anpassung des zeitlichen Signals dargestellt. Das modifizierte Betriebsschwingungssignal 8 ist gegenüber dem ursprünglichen gemessenen Betriebsschwingungssignal bzw. Korrektursignal 9 geglättet. Ein solches "glattes" Sinussignal lässt sich einfach durch eine Formel darstellen, was die weitere Berechnung vereinfacht.

Es folgt Schritt S4 in dem die Schwingmaschine 2 während des Betriebes mit einem Anregungssignal 10 angeregt wird.

Dies geschieht mithilfe eines Impulshammers 13, welcher auf die Schwingmaschine 2 geschlagen wird.

Hierbei wird über ein visuelles oder akustisches Signal dem Nutzer mitgeteilt, wann er schlagen soll. Mit dem Signal wird auch die Messung gestartet.

Im folgenden Schritt S5 wird ein Antwortschwingungssignal 11 gemessen. Das Verfahren der Messung erfolgt ähnlich der Messung des Betriebsschwingungssignals 8 aus Schritt S2. Auch hier werden über Sensoren der Schwingungsdetektionseirichtung 3 die Schwingungen gemessen und an die Auswerteeinrichtung 4 gesendet.

In diesem Ausführungsbeispiel wird die Messung des Betriebsschwingungssignals 8 und die Messung des Antwortschwingungssignals 11 hintereinander ausgeführt.

Danach wird in Schritt S6 ein Subtraktionssignal 12 bestimmt, indem vom Antwortschwingungssignal 11 das Korrektursignal 9 abgezogen wird.

Hierbei wird das Antwortschwingungssignal 11 in der Auswerteeinrichtung 4 ausgewählt und davon wird das Korrektursignal 9 mathematisch subtrahiert. Da die Messung des Betriebsschwingungssignals 8 und die Messung des Antwortschwingungssignals 11 hintereinander ausgeführt werden, ist auf die richtige Phase des Antwortschwingungssignal 11 zu achten.

Die richtige Phase wird dadurch ermittelt, indem ein Parameter, der die Phase ändert, so lange angepasst wird, bis das erzeugte Subtraktionssignal 12 im FFT-Raum die Betriebsfrequenz nicht oder nur noch schwach zu erkennen ist.

Hierdurch ist im erzeugten Subtraktionssignal 12 lediglich die Reaktion der Schwingungsmaschine 2 auf das Anregungssignal 10 zu sehen (siehe Figur 4).

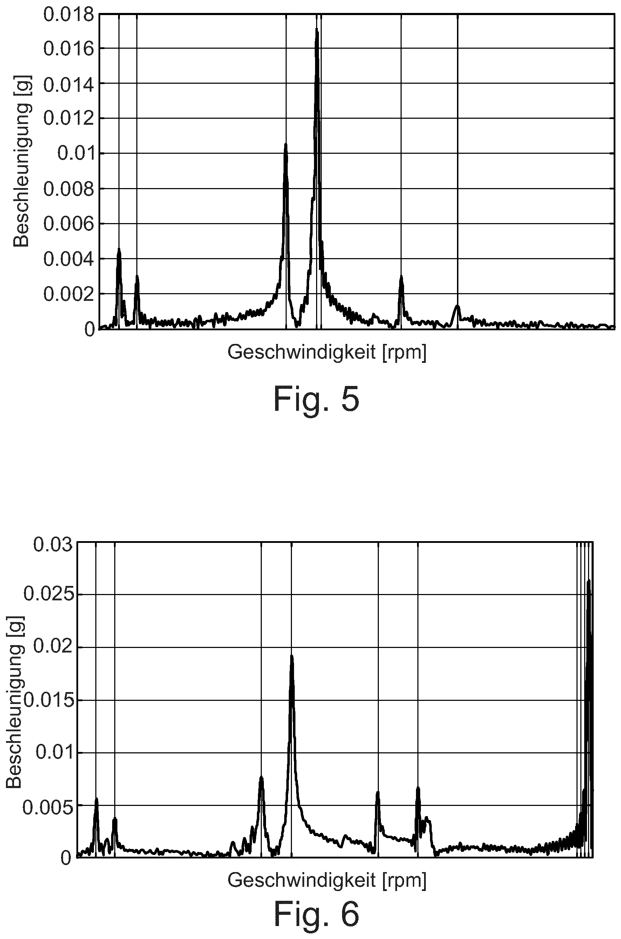

Im anschließenden Schritt S7 wird das Subtraktionssignal 12 mithilfe einer Fast Fourier Transformation in den Frequenzraum überführt. Die dort zu erkennenden Peaks entsprechen den Eigenfrequenzen der Schwingmaschine 2 (Figur 6).

Wie Figur 6 zeigt, entsprechen die ermittelten Eigenfrequenzen nahezu den ermittelten Eigenfrequenzen wie sie mit einem Verfahren ermittelt werden, bei dem die Schwingmaschine ohne Beladung angehalten ist (Figur 5):

| Resonanz | Messung nach dem Stand der Technik [rpm] | Messung nach dem vorliegenden Verfahren [rpm] | Differenz [rpm] | Differenz [%] |
|---|---|---|---|---|
| 1 | 1267,5 | 1248,75 | -18,75 | -1,48 |
| 2 | 1087,5 | 1072,5 | -15,00 | -1,38 |
| 3 | 1758,75 | 1751,25 | -7,50 | -0,43 |
| 4 | 2085 | 2043,75 | -41,25 | -2,00 |
| 5 | 116,25 | 108,75 | -7,50 | -6,45 |
| 6 | 217,5 | 217,5 | 0 | 0 |
| 7 | - | 1987,5 | - | - |
| 8 | - | 2977,5 | - | - |

Es ist eine Abweichung zwischen 0,4 bis 6,4 % festzustellen. Auffällig ist hierbei, dass die Abweichung jeweils dieselbe Richtung aufweist, was darauf schließen lässt, dass die Abweichungen systematische Abweichungen sind, die schon durch den Betrieb der Maschine entstehen. Ein weiterer Grund könnte durch die Beladung der Maschine vorliegen.

Die Peaks 5 und 6 sind jeweils Resonanzen des starren Körpers, hier ist auch eine besonders hohe Abweichung festzustellen.

Die Peaks 7 und 8 sind Artefakte und entsprechen den ersten beiden Harmonischen.

Das Verfahren endet mit Schritt S8.

Eine weitere Möglichkeit besteht darin, dass nachdem einmal ein Korrektursignal 9 erzeugt wurde, jegliches Signal, das gemessen wird, mit dem Korrektursignal 9 bereinigt wird.

Dies führt dazu, dass ohne ein Anregungssignal 10 eine Nulllinie entsteht und bei Anlegen eines Anregungssignals 10 dies sofort zu erkennen ist.

In einer alternativen Ausführungsform wird auf einen Impulshammer 13 verzichtet. Das Anregungssignal 10 wird hierbei automatisch durch größere Materialbrocken erzeugt, die auf die Schwingmaschine 2 fallen. Hierdurch ist eine längerfristige und wiederholte Überwachung im Betrieb der Eigenfrequenzen möglich.

In einer weiteren alternativen Ausführungsform wird die Messung des Antwortschwingungssignals 10 durch den Hammerschlag getriggert.

Wie oben beschrieben, muss, wenn das Betriebsschwingungssignal 8 und das Antwortschwingungssignal 11 nicht zeitgleich gemessen wird, Phase der Betriebsschwingung im Antwortschwingungssignals 11 und seiner Harmonischen bekannt sein, um das Korrektursignal 9 mit der richtigen Phase von diesem Antwortschwingungssignal 11 abzuziehen, um dadurch das Subtraktionssignal 12 zu erhalten.

Neben der oben erwähnten Möglichkeit, die Phase des Antwortschwingungssignal 11 so lange anzupassen, bis das Signal der Betriebsschwingung minimiert ist, werden im Folgenden Alternativen aufgeführt, wie die Phasen des Betriebsschwingungssignals 8 und des Antwortschwingungssignals 11 in Übereinstimmung gebracht werden können.

Bei einer ersten alternative Ausführungsform wird die Phase des Korrektursignals 9 durch eine Phasenspektrum bestimmt. Dieses Phasenspektrum wird durch die FFT, wie sie in der alternativen Form von Schritt S3 oben erläutert wurde, erzeugt.

Anschließend wird auch die Phasen des Antwortschwingungssignals 11 durch eine FFT bestimmt.

Die Phase der Betriebsschwingung im Antwortschwingungssignals 11 wird bei der entsprechenden Frequenz als Vorzugsphase bestimmt.

Die Phasen der Harmonischen werden durch die FFT des Antwortschwingungssignals 11 erneut bestimmt. Alternativ wird bei der Bestimmung der Phasen der Harmonischen im Betriebsschwingungssignal 8 der relative Bezug zur Phase der Betriebsschwingung als relative Phasen gemessen. Dieser relative Bezug bleibt auch im Antwortschwingungssignal 11 erhalten. Ist die Phase der Betriebsschwingung im Antwortschwingungssignals 11 als Vorzugsphase bekannt, wird aus der Vorzugsphase und der relativen Phasen die absoluten Phasen der Harmonischen durch Addition bestimmt.

Ist beispielsweise die relative Phase der 1. Harmonischen 90° und die Vorzugsphase 45°, ergibt sich die absolute Phase der 1. Harmonischen aus der Addition 90° und 45° zu 135°.

Alternativ kann die Phase durch die zeitliche Dauer zwischen der Messung des Betriebsschwingungssignals 8 und der Messung des Antwortschwingungssignals 11 bestimmt werden. Ist die Dauer exakt bekannt, sowie die Phasen des Betriebsschwingungssignal 8 am Ende der Messung, ergibt sich die Phase am Anfang der Messung des Antwortschwingungssignals 11 durch die jeweilige Frequenz und der Dauer.

Beträgt beispielsweise die Dauer 60 Sekunden, die Frequenz der Betriebsschwingung liegt bei 30 Hz und die Betriebsschwingung endet im Betriebsschwingungssignal 8 mit einer Phase von 45°, so ergibt sich eine Anfangsphase PAA im Antwortschwingungssignal 11 aus:

$$P_{AA} = (30 \text{ s} * (30 \text{ Hz}))°+45° = 1800° + 45° = 0° + 45° = 45°$$

Im einfachsten Fall werden die Messungen direkt hintereinander ausgeführt. Die Dauer zwischen den Messungen ist dann null. Die Phasen am Anfang der Messung des Antwortschwingungssignals 11 ist gleich der Phasen des Betriebsschwingungssignal 8 am Ende der Messung.

Die Messung des Betriebsschwingungssignals 8 und des Antwortschwingungssignals 11 kann auch als durchgängige Messung durchgeführt werden, die anschließend bei der Auswerteeinrichtung 4 manuell oder automatisch geteilt wird. In diesem Fall ist die Dauer zwischen den Teil-Messungen auch null.

Im Folgenden wird ein weiteres Ausführungsbeispiel beschrieben, wobei gleiche Elemente wie beim ersten Ausführungsbeispiel mit den gleichen Bezugszeichen versehen sind. Für gleiche Elemente gelten die oben angeführten Erläuterungen, sofern nachfolgend nichts anderes hierzu ausgeführt ist.

Dieses Ausführungsbeispiel unterscheidet sich von ersten Ausführungsbeispiel dadurch, dass die Bestimmung eines Betriebsschwingungssignals 8, die Anregung der Schwingmaschine 2 und das Messen eines Antwortschwingungssignals 11 gleichzeitig stattfindet.

Hierbei wird lediglich ein Signal gemessen, dass das Antwortschwingungssignal 11 umfasst. Es wird gemessen, während das Anregungssignal 10 die Schwingmaschine 2 anregt.

Das Betriebsschwingungssignal 8 wird die Messung dominieren. Wird das gemessene Signal durch eine FFT fourier-transformiert, so wird die Frequenz der Betriebsschwingung als das stärkste Signal zu erkennen sein. Die Harmonischen können dann durch die Vielfachen dieser Frequenz bestimmt werden, wobei, wie oben erwähnt, auch Subharmonische mit z.B. der halben Frequenz, dazuzählen.

Die Frequenzen, die durch das Anregungssignal 10 angeregt wurden, sind zwar auch in dieser FFT enthalten, werden aber durch die Betriebsschwingung und ihrer Harmonischen überlagert.

Während der Fouriertransformation werden auch die Amplituden und Phasen der Betriebsschwingung und ihrer Harmonischen bestimmt.

Aus diesen Informationen, der Frequenzen, der Amplituden und Phasen, werden, wie im oberen Ausführungsbeispiel in Schritt S3 erläutert, das Korrektursignal 9 gebildet.

Anschließend wird, analog zu Schritt S6, das Subtraktionssignal erzeugt.

Der Vorteil hierbei ist, dass lediglich eine Messung verwendet wird. Hierdurch wird zum einen die Messung vereinfacht. Des Weiteren muss nicht mehr darauf geachtet werden, dass die Phasen des das Antwortschwingungssignals 11 gleich des Betriebsschwingungssignals 8 ist. Durch die Verwendung einer gemeinsamen Messung ist die Phase automatisch identisch.

Durch die hier beschriebenen Verfahren können somit nicht nur während des laufenden Betriebes eine Resonanzmessung durchgeführt werden, sondern die durchgeführte Messung ist auch genauer, da sie näher die Wirklichkeit abbildet. So ist eine systematische Abweichung des hier beschriebenen Verfahrens gegenüber dem herkömmlichen Verfahren im ausgeschalteten Betrieb ohne Beladung erkennbar. Da die Schwingmaschine jedoch einen Großteil der Zeit sich im Betrieb mit Beladung befindet, ist es sehr vorteilhaft, die Eigenfrequenzen im Betrieb mit Beladung zu kennen und nicht diejenigen im ausgeschalteten Betrieb. So kann effizient eine Resonanzkatastrophe verhindert werden.

Die Schwingmaschine 2 kann auch statt eines Schwingförderers 2 auch als Schwingsieb 2 ausgebildet sein. Durch die verschiedenen Siebschichten kann es auch im Betrieb zu einer Veränderung des Beladungszustandes kommen. Dies kann Auswirkungen auf die Eigenfrequenzen haben, auch wenn diese meist unerwünscht sind. Änderungen können auch dadurch entstehen, dass sich die Schüttguteigenschaften des Anlageprozesses ändern.

Sämtliche Änderungen des Schüttgutverhaltens werden wieder Auswirkung auf das Resonanzverhalten haben.

### Bezugszeichen

1    System zur Resonanzanalyse einer Schwingmaschine
2    Schwingungsmaschine
3    Schwingungsdetektionseinrichtung
4    Auswerteeinrichtung
5    Schwingförderrinne
6    Schwingantrieb
7    Schwingsensor 8 Betriebsschwingungssignal
9    Korrektursignal
10   Anregungssignal
11   Antwortschwingungssignal
12   Subtraktionssignal 13 Impulshammer

### Patentansprüche

**1.** Verfahren zur Resonanzanalyse einer Schwingmaschine (2), nämlich eines Schwingsiebes oder eines Schwingförderers (2), im laufenden Betrieb, welches folgende Schritte umfasst:

- Bestimmung eines Betriebsschwingungssignals (8), das die Schwingungen der Schwingmaschine (2) in einem regulären Betrieb umfasst,
- Anregen der Schwingmaschine (2) während des Betriebs mit einem Anregungssignal (10) zum Anregen zusätzlicher Schwingungen an der Schwingungsmaschine (2), wobei das Anregungssignal ein Dirac-Impuls ist,
- Messen eines Antwortschwingungssignals (11) der Schwingmaschine (2) auf die Anregung während des Betriebes,
- Bestimmen eines Korrektursignals (9) durch Verwenden des Betriebsschwingungssignals (8),
- Bestimmen eines Subtraktionssignals (12) durch Subtrahieren des Korrektursignals (9) von dem Antwortschwingungssignal (11), und
- Frequenzanalyse des Subtraktionssignals (12) zur Bestimmung der Eigenfrequenzen der Schwingmaschine, wobei die dominierenden Frequenzen des Subtraktionssignals (12) den Eigenfrequenzen des Systems im Frequenzbereich des Anregungssignals (10) entsprechen.

**2.** Verfahren nach Anspruch 1, **dadurch gekennzeichnet, dass** das Betriebsschwingungssignal modifiziert wird, bevor es als Korrektursignal verwendet wird.

3. Verfahren nach Anspruch 2, **dadurch gekennzeichnet, dass** bei der Erzeugung des Korrektursignals (9):

- die Frequenz mit der stärksten Amplitude aus dem Betriebsschwingungssignal (8) bestimmt wird, im folgenden Betriebsfrequenz genannt,
- die Amplitude und Phase der Betriebsfrequenz in dem Betriebsschwingungssignal (8) bestimmt wird,
- die Amplitude und Phase der Harmonischen der Betriebsfrequenz in dem Betriebsschwingungssignal (8) bestimmt wird,
- aus Amplitude und Phase der Betriebsfrequenz sowie aus Amplitude und Phase der Harmonischen der Betriebsfrequenz das Korrektursignal (9) erzeugt wird.

4. Verfahren nach Anspruch 3, **dadurch gekennzeichnet, dass** die Harmonischen ein oder mehrere der Vielfachen der Betriebsfrequenz sind, bevorzugt sind hierbei 1/2, 3/2, 1/3, 2/3, 2, 3, 4, 5, 8, 16, und 32 -fache der Betriebsfrequenz.

5. Verfahren nach einem der Ansprüche 2 bis 4, **dadurch gekennzeichnet, dass** das Betriebsschwingungssignal (8) durch automatische Parameterschätzung geschätzt und mit den sich daraus ergebenen Parametern modifiziert wird.

6. Verfahren nach Anspruch 1, **dadurch gekennzeichnet, dass** das Korrektursignal (9) dadurch dem Betriebsschwingungssignals (8) nachgebildet wird, indem über eine vorbestimmte Dauer das Betriebsschwingungssignal (8) aufgenommen wird und als Korrektursignal (9) verwendet wird.

7. Verfahren nach Anspruch 1, **dadurch gekennzeichnet, dass** das Betriebsschwingungssignal (8) als Korrektursignal (9) verwendet wird.

8. Verfahren nach einem der Ansprüche 1 bis 7, **dadurch gekennzeichnet, dass** die Eigenfrequenzen in einem Frequenzbereich von größer als 0,01 Hz, vorzugsweise von größer als 0,1 Hz und insbesondere von größer als 1 Hz bestimmt werden.

9. Verfahren nach einem der Ansprüche 1 bis 8, **dadurch gekennzeichnet, dass** die Eigenfrequenzen in einem Frequenzbereich bis kleiner als 1 kHz, vorzugsweise bis kleiner als 500 Hz und insbesondere bis kleiner als 50 Hz bestimmt werden.

10. Verfahren nach einem der Ansprüche 1 bis 9, **dadurch gekennzeichnet, dass** nach dem Schritt der Frequenzanalyse, die Betriebsfrequenz geändert wird und alle Schritte wiederholt werden.

11. Verfahren nach einem der Ansprüche 1 bis 10, **dadurch gekennzeichnet, dass** an mehreren Stellen ein Anregungsschwingungssignal (10) auf die Schwingmaschine übertragen wird.

12. Verfahren nach einem der Ansprüche 1 bis 11, **dadurch gekennzeichnet, dass** an mehreren Stellen ein Antwortschwingungssignal (11) gemessen wird.

13. Verfahren nach einem der Ansprüche 1 bis 12, **dadurch gekennzeichnet, dass** die Bestimmung eines Betriebsschwingungssignals (8), die Anregung der Schwingmaschine (2) und das Messen eines Antwortschwingungssignals (11) sich zeitlich überlagert und/oder gleichzeitig stattfindet.

**Claims**

1. A method for resonance analysis of a vibration machine (2), in particular a vibrating screen or a vibrating conveyor (2), during operation, comprising the following steps:

- determination of an operating vibration signal (8) comprising the vibrations of the vibration machine (2) in regular operation,
- excitation of the vibration machine (2) during operation with an excitation signal (10) for exciting additional vibrations at the vibration machine (2), wherein the excitation signal is a Dirac pulse,
- measuring a response vibration signal (11) of the vibration machine (2) to the excitation during operation,
- determining a correction signal (9) by using the operating vibration signal (8),
- determining a subtraction signal (12) by subtracting the correction signal (9) from the response vibration signal (11), and

- frequency analysis of the subtraction signal (12) for determining the natural frequencies of the vibration machine, wherein the dominant frequencies of the subtraction signal (12) correspond to the natural frequencies of the system in the frequency range of the excitation signal (10).

2. The method according to claim 1, **characterized in that** the operating vibration signal is modified before it is used as a correction signal.

3. The method according to claim 2, **characterized in that** when generating the correction signal (9):

   - the frequency with the highest amplitude is determined from the operating vibration signal (8), hereinafter referred to as the operating frequency,
   - the amplitude and phase of the operating frequency are determined in the operating vibration signal (8),
   - the amplitude and phase of the harmonics of the operating frequency in the operating vibration signal (8) is determined,
   - the correction signal (9) is generated from the amplitude and phase of the operating frequency and from the amplitude and phase of the harmonics of the operating frequency.

4. The method according to claim 3, **characterized in that** the harmonics are one or more of the multiples of the operating frequency, preferably 1/2, 3/2, 1/3, 2/3, 2, 3, 4, 5, 8, 16, and 32 times the operating frequency.

5. The method according to any one of claims 2 to 4, **characterized in that** the operating vibration signal (8) is estimated by automatic parameter estimation and modified using the resulting parameters.

6. The method according to claim 1, **characterized in that** the correction signal (9) is modeled on the operating vibration signal (8) by taking up the operating vibration signal (8) over a predetermined duration and using it as the correction signal (9).

7. The method according to claim 1, **characterized in that** the operating vibration signal (8) is used as correction signal (9).

8. The method according to any one of claims 1 to 7, **characterized in that** the natural frequencies are determined in a frequency range of greater than 0.01 Hz, preferably of greater than 0.1 Hz and in particular of greater than 1 Hz.

9. The method according to any one of claims 1 to 8, **characterized in that** the natural frequencies are determined in a frequency range of up to less than 1 kHz, preferably up to less than 500 Hz and in particular up to less than 50 Hz.

10. The method according to any one of claims 1 to 9, **characterized in that** after the step of frequency analysis, the operating frequency is changed and all steps are repeated.

11. The method according to any one of claims 1 to 10, **characterized in that** an excitation vibration signal (10) is transmitted to the vibration machine at several points.

12. The method according to any one of claims 1 to 11, **characterized in that** a response vibration signal (11) is measured at several of points.

13. The method according to any one of claims 1 to 12, **characterized in that** the determination of an operating vibration signal (8), the excitation of the vibration machine (2) and the measurement of a response vibration signal (11) are superimposed in time and/or take place simultaneously.

**Revendications**

1. Procédé d'analyse par résonance d'une machine vibrante (2), à savoir d'un tamis vibrant ou d'un convoyeur vibrant (2), en cours de fonctionnement, qui comprend les étapes suivantes consistant à :

   - déterminer un signal de vibration de fonctionnement (8) incluant les vibrations de la machine vibrante (2) en fonctionnement normal,
   - exciter la machine vibrante (2) pendant le fonctionnement avec un signal d'excitation (10) afin d'impulser des vibrations supplémentaires au niveau de la machine vibrante (2), le signal d'excitation étant une impulsion de Dirac,
- mesurer un signal vibratoire de réponse (11) de la machine vibrante (2) à l'excitation pendant le fonctionnement,
- déterminer un signal de correction (9) en utilisant le signal de vibration de fonctionnement (8),
- déterminer un signal de soustraction (12) en soustrayant le signal de correction (9) du signal de vibration de réponse (11), et
- analyser la fréquence du signal de soustraction (12) afin de déterminer les fréquences propres de la machine vibrante, les fréquences dominantes du signal de soustraction (12) correspondant aux fréquences propres du système dans la plage de fréquences du signal d'excitation (10).

2. Procédé selon la revendication 1, **caractérisé en ce que** le signal de vibration de fonctionnement est modifié avant d'être utilisé comme signal de correction.

3. Procédé selon la revendication 2, **caractérisé en ce que**, lors de la génération du signal de correction (9) :

- la fréquence présentant l'amplitude la plus élevée est déterminée à partir du signal de vibration de fonctionnement (8), ci-après dénommée fréquence de fonctionnement,
- l'amplitude et la phase de la fréquence de fonctionnement dans le signal de vibration de fonctionnement (8) sont déterminées,
- l'amplitude et la phase des harmoniques de la fréquence de fonctionnement dans le signal de vibration de fonctionnement (8) sont déterminées,
- le signal de correction (9) est généré à partir de l'amplitude et de la phase de la fréquence de fonctionnement ainsi qu'à partir de l'amplitude et de la phase des harmoniques de la fréquence de fonctionnement.

4. Procédé selon la revendication 3, **caractérisé en ce que** les harmoniques sont un ou plusieurs parmi les multiples de la fréquence de fonctionnement, et sont de préférence 1/2, 3/2, 1/3, 2/3, 2, 3, 4, 5, 8, 16 et 32 fois la fréquence de fonctionnement.

5. Procédé selon l'une des revendications 2 à 4, **caractérisé en ce que** le signal de vibration de fonctionnement (8) est estimé par estimation automatique des paramètres, et est modifié avec les paramètres qui en résultent.

6. Procédé selon la revendication 1, **caractérisé en ce que** le signal de correction (9) est reconstitué via le signal de vibration de fonctionnement (8) **en ce que** l'on enregistre le signal de vibration de fonctionnement (8) pendant une durée prédéterminée et **en ce qu'**on l'utilise comme signal de correction (9).

7. Procédé selon la revendication 1, **caractérisé en ce que** le signal de vibration de fonctionnement (8) est utilisé comme signal de correction (9).

8. Procédé selon l'une des revendications 1 à 7, **caractérisé en ce que** les fréquences propres sont déterminées dans une plage de fréquences supérieure à 0,01 Hz, de préférence supérieure à 0,1 Hz, et en particulier supérieure à 1 Hz.

9. Procédé selon l'une des revendications 1 à 8, **caractérisé en ce que** les fréquences propres sont déterminées dans une plage de fréquences allant jusqu'à 1 kHz non inclus, de manière préférée jusqu'à 500 Hz non inclus, et en particulier jusqu'à 50 Hz non inclus.

10. Procédé selon l'une des revendications 1 à 9, **caractérisé en ce que**, après l'étape d'analyse de fréquence, la fréquence de fonctionnement est modifiée et toutes les étapes sont répétées.

11. Procédé selon l'une des revendications 1 à 10, **caractérisé en ce qu'**un signal de vibration d'excitation (10) est transmis à la machine vibrante en plusieurs endroits.

12. Procédé selon l'une des revendications 1 à 11, **caractérisé en ce qu'**un signal de vibration de réponse (11) est mesuré en plusieurs endroits.

13. Procédé selon l'une des revendications 1 à 12, **caractérisé en ce que** la détermination d'un signal de vibration de fonctionnement (8), l'excitation de la machine vibrante (2) et la mesure d'un signal de vibration de réponse (11) se superposent dans le temps et/ou ont lieu simultanément.

Fig. 1

Fig. 2

Fig. 3

Fig. 4

Fig. 5

Fig. 6

S1 — Start

S2 — Bestimmung eines Betriebsschwingungssignals

S3 — Nachbilden des Betriebsschwingungssignals als Korrektursignal

S4 — Anregen der Schwingmaschine während des Betriebs mit einem Anregungssignal

S5 — Messen eines Antwortschwingungssignals

S6 — Bestimmen eines Subtraktionssignals

S7 — Frequenzanalyse des Subtraktionssignals

S8 — Ende

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005042085 A1
- WO 2004059399 A2
- WO 2019072462 A1

**In der Beschreibung aufgeführte Nicht-Patentliteratur**

- **RAHMAN et al.** Effectiveness of Impact-Synchronous Time Averaging in determination of dynamic characteristics of a rotor dynamic system. *Measurement*, 2011, vol. 44, 34-45